(19) Europäisches Patentamt
European Patent Office
Office européen des brevets

(11) **EP 4 223 494 A1**

(12) **EUROPEAN PATENT APPLICATION**

(43) Date of publication:
**09.08.2023 Bulletin 2023/32**

(21) Application number: **22155687.1**

(22) Date of filing: **08.02.2022**

(51) International Patent Classification (IPC):
**B29D 11/00** (2006.01) **G02B 27/30** (2006.01)

(52) Cooperative Patent Classification (CPC):
**B29D 11/00634; B29D 11/00788; G02B 27/30**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Nederlandse Organisatie voor toegepast-natuurwetenschappelijk Onderzoek TNO**
**2595 DA 's-Gravenhage (NL)**

(72) Inventor: **The designation of the inventor has not yet been filed**

(74) Representative: **V.O.**
**P.O. Box 87930**
**2508 DH Den Haag (NL)**

(54) **OPTICAL COLLIMATOR FILM, METHOD OF MANUFACTURING THE SAME AND OPTICAL COLLIMATOR FILTER COMPRISING AN OPTICAL COLLIMATOR FILM**

(57) A method of manufacturing an optical collimator film (10) is provided comprising: providing a mold (50) comprising an array of pillars (51); with said mold (50) forming the optical collimator film (10) from an elastic light absorbing material having apertures (A) therein defined by the array of pillars (51); separating the collimator film (10) from the mold (50). Additionally a stretchable collimator film (10) of a light absorbing material defining apertures (A) is provided wherein the light absorbing material has a Young's modulus of at most 1 MPa. Still further a collimator filter comprising the collimator film is provided.

FIG 1D

## Description

TECHNICAL FIELD AND BACKGROUND

The present disclosure relates to a method of manufacturing an optical collimator film.

The present disclosure further relates to an optical collimator film.

The present disclosure still further relates to an optical collimator filter.

As background, US 2016/0224816 A1 describes systems and methods for optical imaging. An optical fingerprint sensor includes an image sensor array; a collimator filter layer disposed above the image sensor array, the collimator filter layer having an array of apertures; and an illumination layer disposed above the collimator filter layer. The collimator filter layer filters reflected light such that only certain of the reflected light beams reach optical sensing elements in the image sensor array. Employing the collimator filter layer prevents blurring while allowing for a lower-profile image sensor. By way of example, the collimator filter layer may be made of plastics such as polycarbonate, PET, polyimide, carbon black, inorganic insulating or metallic materials, silicon, or SU-8. Instead of placing a separate collimator filter layer on top of the image sensor array, back-end processes are added to CMOS image sensor array fabrication. With this technique, no separate manufacturing of the collimator filter layer is required. On top of the CMOS image sensor array, liquid-type polymer resin with light-absorbing dyes such as carbon black may be coated first then cured to form the collimator filter layer body. After the polymer resin is cured, metal may be optionally sputtered onto the cured resin top to act as a reflective layer. The aperture pattern may be made through photolithography and etching of the metal and the polymer layer underneath subsequently to create the apertures. As a final step, the metal layer can be roughened up to create a reflecting/diffusing layer.

There remains a need for further improvements in the manufacturability and durability of collimator filters.

SUMMARY

Aspects of the present disclosure relate to an improved method of manufacturing an optical collimator film.

Aspects of the present disclosure further relate to an improved optical collimator film.

Aspects of the present disclosure still further relate to an improved optical collimator filter.

Embodiments of the improved method include providing a mold comprising an array of pillars. In this connection it is noted that the wording 'pillar' is used to denote a cylindrical element having a high aspect ratio. e.g. a cylindrical element with a circular or a rectangular cross-section that has a length that is at least five times a generalized diameter. The wording 'generalized diameter' denotes the diameter of a circle having the same cross-sectional area as the cross-section of an individual pillar. Hence, in case the pillars have a circular cross-section, the generalized diameter is equal to the diameter of the pillars. In practice the aspect ratio as defined herewith may be even substantially larger, e.g. at least 10 or even at least 50.

In embodiments of the improved method the optical collimator film is formed in said mold from a light absorbing elastic material having apertures therein defined by the array of pillars. Subsequently, the collimator film is separated from the mold so that the mold can be reused for forming a subsequent collimator film. It is sufficient that the optical collimator film absorbs light in a wavelength range for which it is designed to be used. The elastic nature of the material of the optical collimator enable an easy separation thereof from the mold. Subsequent to removal of the collimator film from the mold, the mold can be reused for manufacturing a subsequent collimator film. The elastic nature of the material further serves as protection when it is combined with an image sensor. In particular a combination with a flexible image sensor is very favorable, as it mechanically protects the image sensor without compromising its flexibility

One property of the elastic material is its Young's modulus. The Young's modulus denoted with capital "E", is a mechanical property that measures the tensile or compressive stiffness of a solid material when the force is applied lengthwise. It quantifies the relationship between tensile/compressive stress $\sigma$ (expressed as the force per unit area) and an axial strain $\varepsilon$ (relative deformation, dimensionless) in the linear elastic region of a material, e.g. according to the formula: $E=\sigma/\varepsilon$. For the purpose of the present application it is generally favorable if the Young's modulus is relatively low, e.g. at most 1 MPa, preferably at most 0.5 MPa. A low Young's modules facilitates removal of the optical collimator film from the mold. In order to facilitate handling in an industrial process the Young's modules is preferably not lower than 0.001 MPa. A typical range in practical applications is e.g. a Young's modulus between 0.01 ... 0.05 MPa. Various exemplary rubber materials are available with a Young's modulus in the range of 0.01 ... 0.1 MPa. In one example a composite of a silicon rubber filled with carbon particles has a Young's modulus of about 0.020 MPa. A support layer, optionally used as described above for facilitating removal and/or to form part of a resulting optical collimator product may have a same or higher value for its Young's modulus. A very low Young's modulus of a support layer is not necessary as it does not have to be detached from the pillars.

Another relevant material property of the elastic light absorbing material is its Poisson's ratio. The Poisson's ratio denoted with the symbol "v" is a measure of the Poisson effect. This is the deformation (expansion or contraction) of a material in directions perpendicular to the specific direction of loading. When the elastic light absorbing material is pulled out of the mold its thickness (in the length direction of the pillars, tends to increase. As a result of the Poisson effect, the width of the material present between apertures through which the pillars protrude tends to decrease, so that the material detaches from the apertures. In this process it is advantageous if the Poisson's ratio is close to 0.5, for example at least 0.4, preferably at least 0.45, or even more preferably at least 0.49.

It is further advantageous in the improved method if the material used for the optical collimator is fully elastic within a deformation range of at least the first 5% elongation. Hence if in the step of pulling the elastic light absorbing material from the mold the relative deformation of the material in the pulling direction does not exceed 5%, the shape of the material assumes its original shape once it is released. In practice the deformation range of the material can be substantially higher, e.g. more than 10%, for example more than 100%. For the carbon-silicon composite used in experiments conducted by the inventor even an elastic deformation range of up to 450% was measured.

Separation of the collimator film from the mold may be further facilitated in various ways as described below. In one embodiment this is achieved in that a support layer is arranged against a side of the mold where the pillars have there free ends and is adhered against a surface of the light absorbing elastic material in the mold. Subsequently, the support layer, and therewith the light absorbing elastic material is pulled away from the mold. In some examples of this embodiment, the support layer is subsequently separated from the light absorbing elastic material. In other examples, provided that the support layer is transparent, the light absorbing elastic material may stay adhered to the support layer as part of a collimator product. In some examples the support layer is made of a transparent cross-linked material and the collimator film is a composition of that material and light absorbing particles.

Facilitating a separation of the collimator film from the mold is also facilitated in embodiments wherein the mold is provided with one or more lateral portions outside a main portion where the collimator film is to be formed. In this case separation of the collimator film can be achieved by pulling at a lateral portion. Also in these embodiments, the separation may be further facilitated by use of a support layer as described in the preceding paragraph.

Embodiments may be contemplated wherein the pillars are provided as hollow elements that cut out the apertures from the light absorbing elastic material when said material is provided into the mold.

Some embodiments of the method comprise filling a space between the pillars with a curable precursor for the elastic, light absorbing resin material and subsequently curing the precursor to obtain the elastic, light absorbing resin material. This obviates the use of hollow elements as the pillars and reduces use of material.

A filling level of the liquid precursor may be accurately controlled by sensing means, for example a sensor that measures a height of surface of the liquid inside the mold or a sensor that measures an amount of the liquid supplied into the mold.

Optionally an excess amount of the liquid above the free ends of the pillars is removed with a blade. The blade may be supported at its sides by a rim of the mold, or otherwise be guided so that the upper surface of the liquid precursor coincides with the free ends of the pillars. Therewith an accurate dosing of the liquid precursor in the mold is not required. In case the filling level deliberately or accidently exceeds the height of the pillars the excess amount of liquid is removed in this step.

Alternatively, in case the method comprises a placement of a support layer, an excess amount of liquid, if present, may be removed by exerting a pressure to the support layer that causes the excess amount of liquid to escape.

It is noted that various options are available to cause curing of the precursor. In some examples the precursor is cured by an external supply of energy, e.g. through heat or photon radiation. It is noted that photon radiation for curing may be in a wavelength range different from a wavelength range for which the resin material has to be opaque in the application of the optical collimator. In some examples the material used for the mold, including the pillars, is optically transparent for the photon radiation for curing. This facilitates a process of irradiating the precursor to be cured. It is therewith advantageous if a refractive index of the material of the mold is higher than that of air. Therewith it is achieved that actinic radiation used for curing which is directed at an angle with the length direction of the pillars is refracted towards the curable material around the pillars. As an alternative to the option wherein a precursor is cured by an external supply of energy, a precursor may be used that comprises a combination of mutually reactive components. In this case the composition of mutually reactive components is prepared short before the mold is to be filled with the composition.

In some embodiments the elastic, light absorbing material is of a single opaque component. In other embodiments the elastic, light absorbing material is a composition of components, for example a composition of a cross-linked rubber which itself may be of a transparent nature and opaque particles, e.g. carbon particles. Filler particles, for example carbon particles for optical absorption, are preferably small, for example at least 5 times as small, in comparison to the lateral dimensions of the collimator matrix wall thickness, otherwise this will lead to fracture sensitive locations or even non-uniform filling of the mold. For example, in case the wall thickness is 1 micron, the particles may have a particle size in the order of 100 nm.

The improved method renders it possible to efficiently manufacture an optical collimator film of a light absorbing material with high aspect ratio apertures for optical collimation.

The light absorbing material of the improved optical collimator film as provided herein has a Young's modulus of at most 1 MPa. This property renders it possible to manufacture the optical collimator film with the improved method. For an efficient and simple manufacturing process the Young's modulus is preferably at most 0.5 MPa, or even more preferably at most 0.1 MPa. An optical collimator film having a low Young's modulus can be removed from the mold with a modest force which simplifies the tools to be used. Due to the fact that a modest force suffices, therewith a risk of damage to the mold is strongly mitigated. On the other hand it is favorable if the Young's modulus is not too low. For example if the Young's modulus were substantially lower than e.g. 0.005 MPa, e.g. 0.001 MPa, the manufacturing process would also be relatively complicated due to the fact that small variation in the force with which the collimator film is handled cause substantial variations in deformations of the material. Good results were obtained with composites of a silicon rubber and carbon nano particles. In these examples, the Young's modulus is about 0.02 MPa.

A further favorable property of an improved collimator film is a Poisson's ratio of the elastic light absorbing material of at least 0.4. As discussed above, this property contributes to an easy separation of the improved collimator film from the mold, in that the apertures of the film substantially increase in size when the film is stretched in its thickness direction if it is pulled apart from the mold. Preferably the Poisson's ratio of the elastic light absorbing material is as close as possible to 0.5, e.g. at least 0.45 or at least 0.49.

A still further favorable property of an improved collimator film is a fully elastic nature of the light absorbing material of the collimator film. This renders it possible that the improved collimator film after it is separated from the mold is accurately defined by the dimensions of the mold. I.e. the diameter of the apertures exactly correspond to the diameter of the pillars. In case the material were not fully elastic, the collimator film would remain slightly deformed after removal from the mold. Whereas the deformation could be compensated for by an adaptation of the dimension of the mold, this can be avoided if the material is at least substantially fully elastic. Provided that sufficient care is taken it may be sufficient that the elastic deformation range is at least 5%. I.e. upon being subjected to a relative deformation not exceeding 5%, the material fully assumes its original shape in the absence of external forces. However, to relax production and process requirements as much as possible, it is preferred that the elastic deformation range is larger, e.g. at least 10 % or at least 100 %.

In embodiments of an improved collimator film a ratio defined by a thickness of a wall between mutually neighboring apertures divided by a diameter of the apertures is in a range between 0.1 and 0.5. A substantially larger value for this ratio, e.g. a ratio larger than 0.8 would result in a relatively low efficiency of the collimator film, as most of the light, even entering the collimator film in a direction aligned with the apertures would be substantially absorbed by the light absorbing material. A substantially smaller value for this ratio, e.g. value less than 0.05 would render the film mechanically vulnerable unless it is protected by a frame.

In exemplary embodiments of the improved collimator film the apertures in the collimator film are filled with a transparent filling material. This contributes to a mechanical strength of the film and may further result in improved optical properties as specified below. In some embodiments the material of the matrix of the collimator film, i.e. defining the walls between the apertures comprises a same polymer or resin as used for the filling of the apertures and the material of the matrix is rendered opaque in that the polymer or resin, e.g. a silicon rubber used therein is used in a composition comprising light absorbing particles (e.g. carbon particles).

It will be appreciated that the apertures can be dimensioned to define a threshold angle. For example, the apertures, due to their size also denoted as micro-apertures have a (maximum or average) aperture diameter transverse to the principal transmission direction and a (minimum or average) aperture length along the principal transmission direction. The higher the ratio aperture length/aperture diameter, the smaller the threshold angle.

An improved collimator filter as provided herein comprises an entry surface an exit surface and an embodiment of an improved collimator film. The entry surface is configured to receive incident light at different angles of incidence with respect to a principal transmission direction of the collimator filter, and the exit surface which is at an opposite side of the collimator filter with respect to the entry surface is configured to allow output light to exit from the collimator filter. The improved collimator film between the entry surface and the exit surface is configured to transmit at least part of the incident light having angles of incidence below a threshold angle with respect to the principal transmission direction as the output light, and blocking the incident light having angles of incidence above the threshold angle from passing the filter structure.

In exemplary embodiments of the collimator filter the apertures in the collimator film are filled with a transparent filling material. This contributes to a mechanical strength of the collimator film. In preferred embodiments the transparent filling material has a refractive index greater than a refractive index of a medium at the entry surface of the collimator filter. E.g. if the medium at the entry surface of the collimator filter is air, which has a refractive index of about 1, the transparent filling material has a refractive index of 1.1 or more. Alternatively, the medium at the entry surface of the collimator filter may be a plate of a resin material with a relatively low refractive index, e.g. of about 1.3 or 1.4, and the transparent filling material may be a resin with a relatively high refractive index, e.g. 1.6 or 1.7.

An embodiment of the collimator filter comprises a plurality of mutually disjunct collimator film sections arranged in a matrix on a support layer and each collimator film section comprises a set of apertures. This embodiment is particular suitable for use in a display device comprising display pixels and detector pixels arranged in a common plane. In an embodiment thereof the mutually disjunct collimator film sections are aligned with the detector pixels therewith leaving free the display pixels. With this arrangement it is achieved that a properly collimated image is obtained by the detector pixels, while it is avoided that a viewing angle of the display is restricted too much.

BRIEF DESCRIPTION OF DRAWINGS

These and other features, aspects, and advantages of the apparatus, systems and methods of the present disclosure will become better understood from the following description, appended claims, and accompanying drawing wherein:

FIGs. 1A to 1F show an embodiment of the improved method of manufacturing a collimator film;

FIGs. 2A to 2E shows aspects of said embodiment in a perspective view;

FIG. 3A shows a portion of an embodiment of a collimator film according to the present disclosure;

FIG. 3B shows in a perspective view an embodiment of a collimator filter comprising the collimator film;

FIGs. 4A to 4D show another embodiment of the improved method of manufacturing a collimator film;

FIGs. 5A to 5D shows aspects of said another embodiment in a perspective view;

FIGs. 6A, 6B show microscope images of an embodiment of a collimator film according to the present disclosure at mutually different magnifications;

FIGs. 7A, 7B show a monitor screen of which a portion of the surface is covered with a collimator film as shown in FIG. 6A, 6B at mutually different angles;

FIG. 7C shows a normalized transmission of embodiments of the improved optical collimator film as a function of a viewing angle;

FIGs. 8A, 8B schematically show embodiments of a display screen provided with an improved optical collimator film;

FIGs. 9A to 9D are included to show optional further steps to be carried out as part of an embodiment of the improved method; Therein FIG. 9C and FIG. 9D illustrate two embodiments of an improved collimator film obtained therewith;

FIG. 10 illustrates measurement results obtained for an elastic opaque material as used in embodiments of the improved product;

FIGs. 11A to 11E show in a perspective view a still further embodiment of the improved method of manufacturing a collimator filter;

FIGs. 12A, 12B show a collimator filter obtained with the embodiment of FIGs. 11A to 11E, therein FIG. 12B shows an enlarged image of the section indicated with XIIB in FIG. 12A.

DESCRIPTION OF EMBODIMENTS

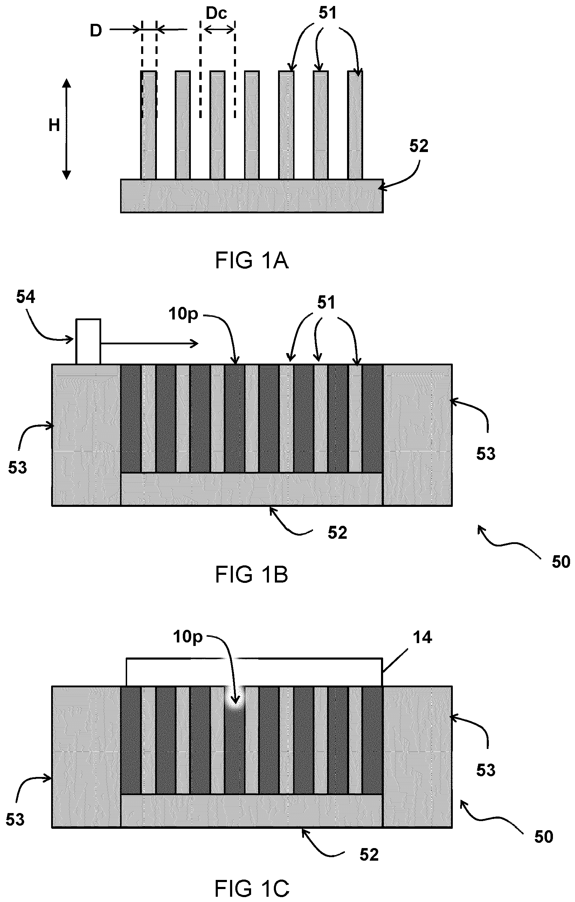

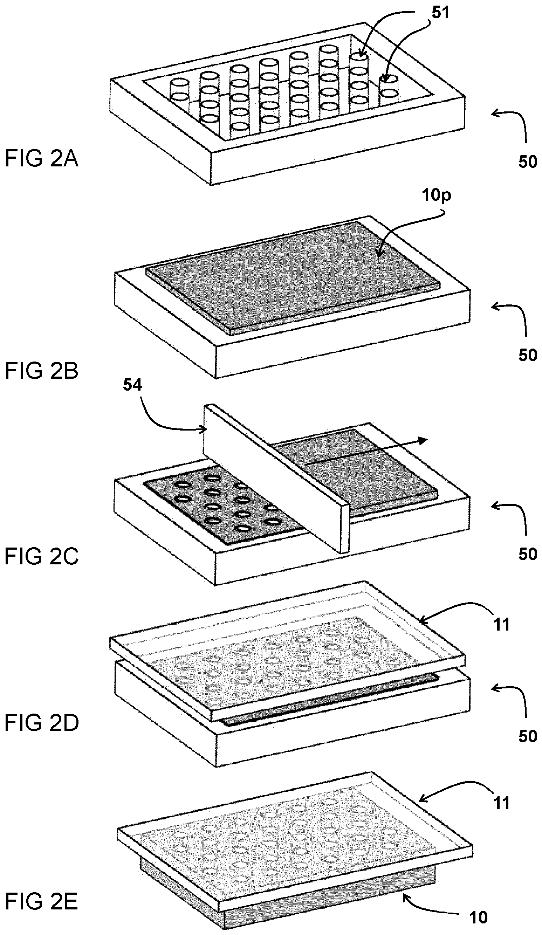

FIG. 1A to 1F schematically illustrate a method of manufacturing an optical collimator film. FIG. 2A - 2E further show selected steps in a perspective view.

As shown in FIG. 1A, 2A a mold 50 is provided that comprises an array of pillars 51 arranged on a bottom wall 52. The mold 50 further comprises side-walls 53 (see FIG 1B) which may be detachable from the bottom wall 52 with pillars 51. The wording pillar is used herein to indicate a cylindrical object, e.g. having a circular or a rectangular cross-section having a height that is at least twice the square root of its cross-sectional area. In the example shown, the pillars 51 may have a diameter in the range of 1 to 100 micron, and may be regularly arranged, e.g. according to a rectangular or a hexagonal grid, wherein a distance between mutually neighboring pillars 51 is in the same order of magnitude as a diameter of the pillars. For example, a ratio defined by a diameter D of the pillars divided by a center-to-center distance Dc of mutually neighboring pillars is in the range of 0.6 to 0.9. In the example shown the diameter D of the pillars is about 10 micron, and the distance Dc between neighboring pillars is about 5 micron. The pillars may have a height to diameter ratio H/D in the range of about 5 to about 100, e.g. about 8 to 50, preferably about 10 to 15. In the example shown the height H of the pillars is about 100 micron. Therewith the height to diameter ratio H/D is about 10. The pillars of the mold are for example provided of a cured photoresist material or a silicon type polymer, such as PDMS. Preferably the material used for the mold 50 has a Young's modulus exceeding 1 GPa.

As shown in FIG. 1B - 1D, subsequently an optical collimator film 10 is formed from an elastic light absorbing material provided in the mold 10. The array of pillars 51 of the mold 50 defines apertures in the optical collimator film.

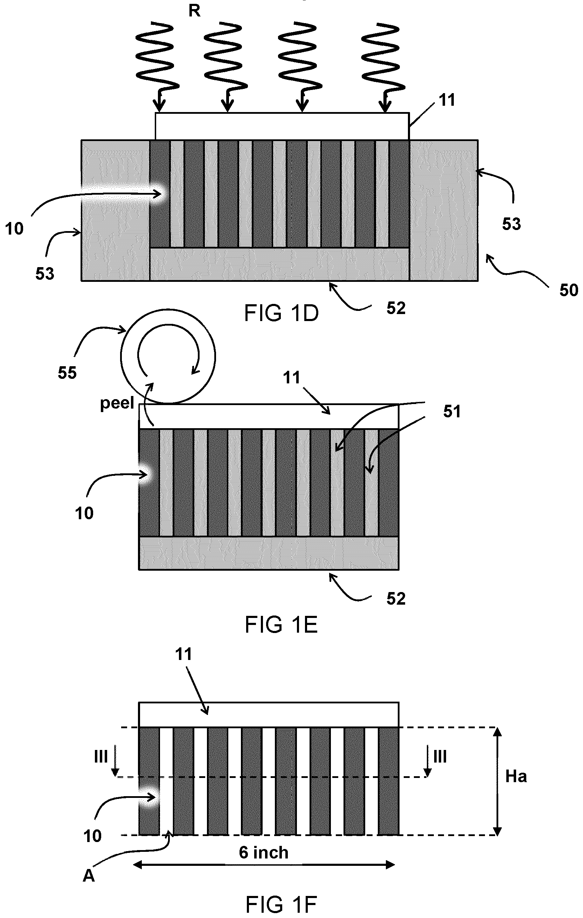

As shown schematically in FIG. 1E, the collimator film 10 having the array of apertures therein is then separated from the mold 50. This is rendered possible by the elastic nature of the material. I.e. as a result of its elastic nature the openings defined therein by the pillars 51 widen when a pulling force is exerted on the material. I.e. a force exerted in an axial direction, i.e. parallel to a direction of the pillars 51 from their ends fixed in the bottom 52 of the mold to their free ends.

In the embodiment shown in FIG. 1A - 1D, the elastic opaque material is provided in a first sub-step shown in FIG. 1B, wherein a space between the pillars is filled with a liquid curable precursor 10p for the elastic, opaque material. Optionally an excess amount of the liquid above the free ends of the pillars (See FIG. 2B) is removed with a blade 54 as shown in FIG. 1B, FIG. 2C. The blade 54 may be supported at its sides by a rim of the mold 50, so that the upper surface of the liquid precursor 10p coincides with the free ends of the pillars 51. In a second sub-step, schematically shown in FIG. 1D, the liquid precursor is cured with photon radiation R so that the mold 50, subsequent to the second sub-step contains the film 10 of the elastic opaque material and the array of pillars 51 defines an array of apertures (A, see FIG. 1F) therein.

In this example, the method involves an intermediate step, shown in FIG. 1C, FIG. 2D and FIG. 2E, wherein a support layer 11 is arranged against a side of the mold 50 where the pillars 51 have their free ends. In the process of curing the precursor in the step shown in FIG. 1D the collimator film 10 formed therewith adheres to the support layer 11. Adherence between the support layer 11 and the film 10 of opaque elastic material can be promoted in that the support layer 11 when arranged at the surface of the precursor 10p of opaque elastic material is not fully cross-linked.

In the step shown in FIG. 1E, the support layer 11, and therewith the film 10 of opaque elastic material having apertures formed therein is pulled away from the mold 50. It is noted that adhesion of the opaque elastic material to the mold 50, including the pillars 51 can be easily avoided by providing surfaces of the mold 50, including those of the pillars that are in contact with the precursor 10p with an anti-adhesive coating, e.g. a fluor based coating, such as a PTFE coating. In the example of FIG. 1E, the support layer 11 having the collimator film 10 adhered thereto is peeled from the mold 50 using a roll 55 having openings (not shown) communicatively coupled to a vacuum pump. Alternatively it may be contemplated to perform peeling with the openings in the roll 55 at a normal pressure, while an overpressure is maintained in the environment where the mold 50 is arranged.

FIG. 1F shows the support layer 11 having the collimator film 10 adhered thereto after its separation from the mold 50. The collimator film 10 is characterized by the elastic nature of the material of the film. I.e. the Young's modulus is at most 1 MPa, preferably at most 0.5 MPa. Exemplary collimator films obtained with the improved method have a Young's modulus between 0.001 ... 0.1 MPa, e.g. the collimator film is of a rubber material with a Young's modulus in the range of 0.01 ... 0.05 MPa, for example a composite of a silicon rubber filled with carbon particles with a Young's modulus of about 0.020 MPa.

The opaque, flexible material of the collimator film 10 obtained with the improved method typically has a Poisson's ratio close to 0.5, for example at least 0.4, preferably at least 0.45, or even more preferably at least 0.49. With the Poisson ratio in this preferred range a strong widening of the apertures A occurs as a result of stretching of the collimator film 10 when it is pulled away from the mold 50.

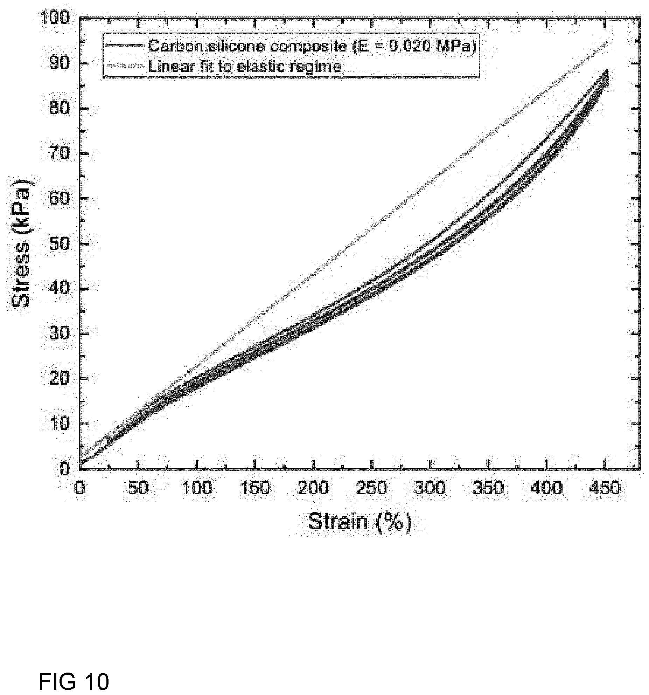

The opaque, flexible material of the collimator film 10 shown in FIG. 1F, FIG. 2E is fully elastic within a deformation range of at least the first 5% elongation. Typically, the deformation range of the material can be substantially larger, e.g. more than 10%, for example more than 100%. In an example the opaque, flexible material is a carbon-silicon composite which remains elastically deformable for deformations up to 450%, as is illustrated in FIG. 10 for an exemplary carbon-silicon composite having Young's modulus of 0.020 MPa.

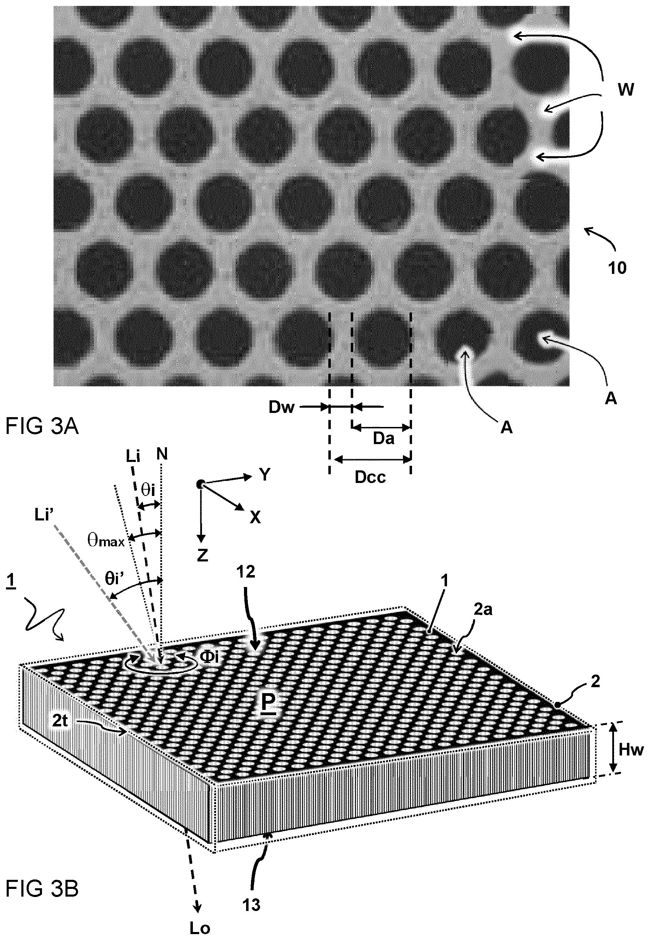

A cross-section of an exemplary collimator film 10 obtained with the improved method is shown in FIG. 3A.

As illustrated in FIG. 3B, the optical collimator film 10 is suitable to provide optical collimation in an collimator filter 1. A collimator filter finds applications in optical sensors, for example a finger print sensor and as a cover on a monitor to prevent that persons nearby the user of the monitor can perceive the image thereon.

A collimator filter 1 as shown in FIG. 3B comprises an entry surface 12, an exit surface 13 at an opposite side of the collimator filter 1 with respect to the entry surface 12 and the stretchable collimator film 10 is arranged between the entry surface 12 and the exit surface 13. The entry surface 12 is configured to receive incident light $Li$, $Li'$ at different angles of incidence $\theta i$, $\theta i'$ with respect to a principal transmission direction Z of the collimator filter 1. The exit surface 13 allows output light $Lo$ to exit from the collimator filter 1. The stretchable collimator film 10 arranged between the entry surface 12 and the exit surface 13 is configured to transmit at least part of the incident light $Li$ having angles of incidence $\theta i$ below a threshold angle $\theta max$ with respect to the principal transmission direction Z as the output light $Lo$, and to block the incident light $Li'$ having angles of incidence $\theta i'$ above the threshold angle $\theta max$ from passing the filter structure.

It will be appreciated that the apertures A in the collimator film 10 can be dimensioned to define the threshold angle $\theta max$. For example, the apertures, due to their size also denoted as micro-apertures "A" have a (maximum or average) aperture diameter "Da" transverse to the principal transmission direction "Z" and a (minimum or average) aperture length Ha along the principal transmission direction "Z". For example, the threshold angle $\theta max$ may be defined as the arccotangent function (arccotan) of the aperture length or height "Ha" (See FIG. 1F) divided by the aperture diameter "Da" i.e. cotan($\theta max$) = Ha/Da. In exemplary embodiments of the manufactured optical collimator film 10, the apertures have an aspect ratio Ha/Da of at least 5. For example, a threshold angle θmax of less than ten degrees may be achieved with an aspect ratio of Ha/Da > 5.88, i.e. cotan(10). For example, a threshold angle θmax of less than five degrees may be achieved with an aspect ratio of Ha/Da > 11.5, i.e. cotan(5) which is greater than 10. For example, a threshold angle θmax of less than one degree may be achieved with an aspect ratio of Ha/Da > 58.8, i.e. cotan(1) which is greater than 50. The higher the aspect ratio Ha/Da, the more collimated the filtered light. For example, the apertures "A" may have a cross-section diameter "Da" between 0.1 - 20 μm, preferably between one and ten micrometer. At the same time, the micro-apertures "A" may e.g. have a length or height "Ha" of at least ten micrometer, preferably at least fifty or at least hundred micrometer, or more, e.g. up to one or even several millimeters.

In the description above it is presumed that the apertures A have an at least substantially circular cross-section. In other words the inner diameter "Da" of the micro-apertures "A" is substantially constant, e.g. within 20%, within 10%, within 5%, or less. This is usually most preferred as therewith the collimator film 10 has isotropic collimation properties. Nevertheless embodiments may be contemplated wherein the apertures are cylindrical with another cross-section, e.g. rectangular or hexagonal. In these cases the aspect ratio may be computed on the basis of an effective diameter, defined as the diameter of a circle having the same cross-sectional area as the cross-sectional area Ax of the cross-section of the apertures A. This implies that the effective diameter of an aperture A is defined as $\sqrt{(4Ax/\pi)}$. In case the cross-section is circular the effective diameter is equal to the diameter.

For a high efficiency of the collimator film 10, it is preferred that a ratio Dw/Da defined by a thickness Dw of a wall between mutually neighboring apertures divided by a diameter Da of the apertures is at most 0.5. An exemplary collimator film manufactured with the improved method has a ratio Dw/Da of about 1/3. For a sufficient mechanical stability the ratio Dw/Da typically is at least 0.1. However, a lower value for the ratio may be suitable if the collimator film is protected from external mechanical loads, for example, it may be protected by a pair of properly spaced protection plates. Related thereto is a ratio Da/Dcc, wherein Dcc is a center-to-center distance of mutually neighboring apertures. This ratio is for example selected in a range of 0.6 to 0.9.

The elastic material of which the collimator film 10 is formed is essentially opaque, at least in a range of wavelengths at which the filter is to be used. For example, the elastic material is opaque in a range or at least a subrange of visible wavelengths (e.g. 400 - 700 nm) and/or infrared wavelengths (e.g. 700 nm-1 mm). For some applications, the elastic material may additionally or alternatively block UV light (below 400 nm) to pass through. For example, the elastic material present between the apertures A blocks more than fifty percent of such light incident thereon, preferably more than eighty percent, more preferably more than ninety percent, or even substantially all the light, e.g. between ninety-five to hundred percent.

In some examples of embodiment of the improved method as described with reference to FIG. 1A - 1F, the support layer 11 used for separating the optical collimator film 10 from the mold 50, is subsequently separated itself from the optical collimator film 10. In other examples, provided that the support layer 11 is transparent, it may stay adhered to the optical collimator film 10 as part of a collimator product. In some examples the support layer 11 is made of a transparent cross-linked material and the collimator film 10 is a composition of that material and light absorbing particles.

A support layer 11, optionally used as described above for facilitating removal and/or to form part of a resulting optical collimator product may have a same or higher value for its Young's modulus. A very low Young's modulus of a support layer 11 is not necessary as it does not have to be detached from the pillars 51 of the mold 50.

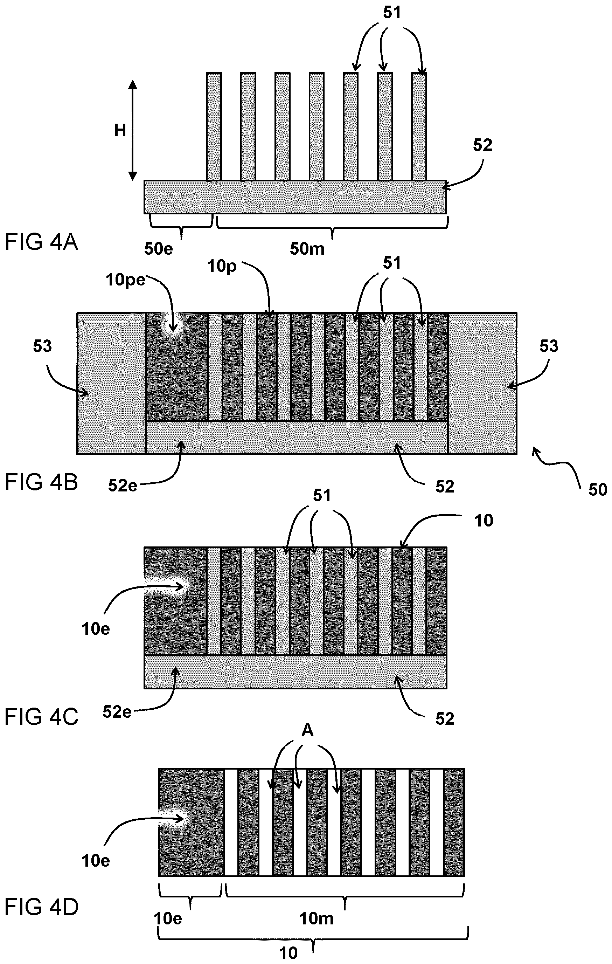

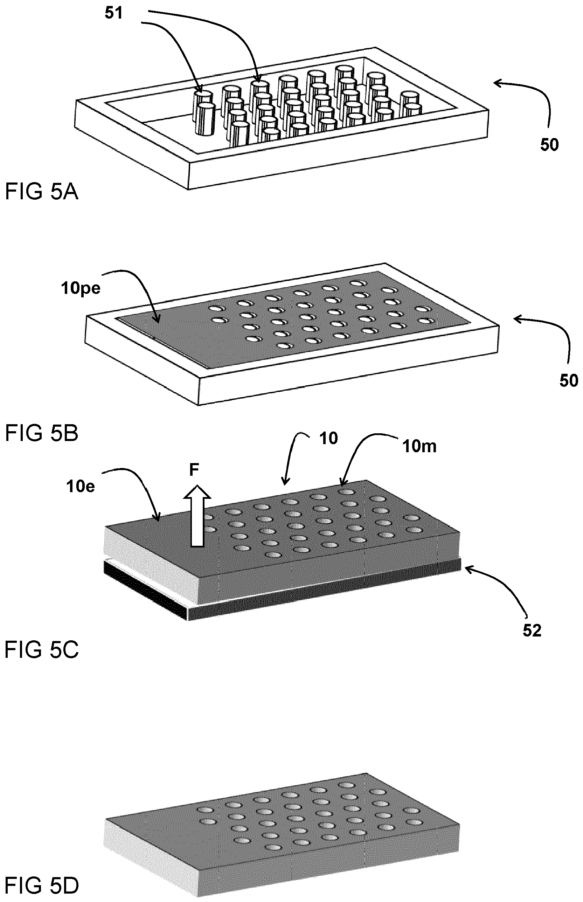

Another embodiment of the improved method is schematically shown in FIG. 4A - 4D. Aspects of this embodiment also are illustrated in a perspective view in FIG. 5A - 5D. As in the first embodiment, a mold 50 is provided that comprises an array of pillars 51. However, as shown in FIG. 4A and FIG. 5A, a part 52e of the bottom surface 52 of the mold is flat. Accordingly, as shown in FIG. 4B and in FIG. 5B, a lateral portion lOpe of the material inside the mold is not protruded by pillars. FIG. 4C, 5C show a stage subsequent to a curing process, wherein sidewalls 53 of the mold 50 have been removed. The collimator film 10 comprises an extension portion 10e that can be released from the mold 50 relatively easily with a low pulling force F due to the absence of protruding pillars 51. By exerting a pulling force at the extension portion 10e also the main portion 10m of the collimator film 10 having the apertures therein can be easily released, to obtain a separate collimator film 10 as shown in FIG. 4D, 5D. If desired, the extension portion 10e can be removed from the collimator film 10 subsequent to the separation step. Measures of the embodiment disclosed with reference to FIG. 1A - 1F and FIG. 2A - 2E on the one hand may be combined with measures of the embodiment disclosed with reference to FIG. 4A - 4D and FIG. 5A - FIG. 5D on the other hand. For example also in the embodiment of FIG. 4, 5, an excess of liquid 10p in the mold 50 may be removed with the process as shown in FIG. 1B, and FIG. 2C. As another example also in the embodiment of FIG. 4, 5, a support layer 11 may be arranged against a side of the mold 50 where the pillars 51 have their free ends after the mold is filled with the precursor. Therewith the support layer 11 may contact the full surface of the filling, i.e. including the surface in the extension area 52e. Once the filling is cured and adhered to the support layer 11, the collimator film 10 can be even more easily be separated from the mold 50 with a process as described with reference to FIG. 1E, starting with the extension portion 10e. Likewise, in that case, the support layer 11 may either remain adhered to the collimator foil 10, or may be separated therefrom. In the latter case, the support layer 11 does not need to be transparent. Nevertheless also in that case a transparent support layer may be preferred to allow transmission of actinic radiation to pass to enable curing. Alternatively curing may be achieved by other means, e.g. by heating or resulting from a reaction between multiple components in the precursor.

It is further noted that instead of using a blade to remove an excess amount of liquid, if any, removal of excess liquid may be achieved by exerting a pressure to the support layer that causes the excess amount of liquid to escape between the rim of the mold and the support layer. This also promotes a contact between the support layer and the liquid, which may contribute to an adherence between the collimator film and the support layer.

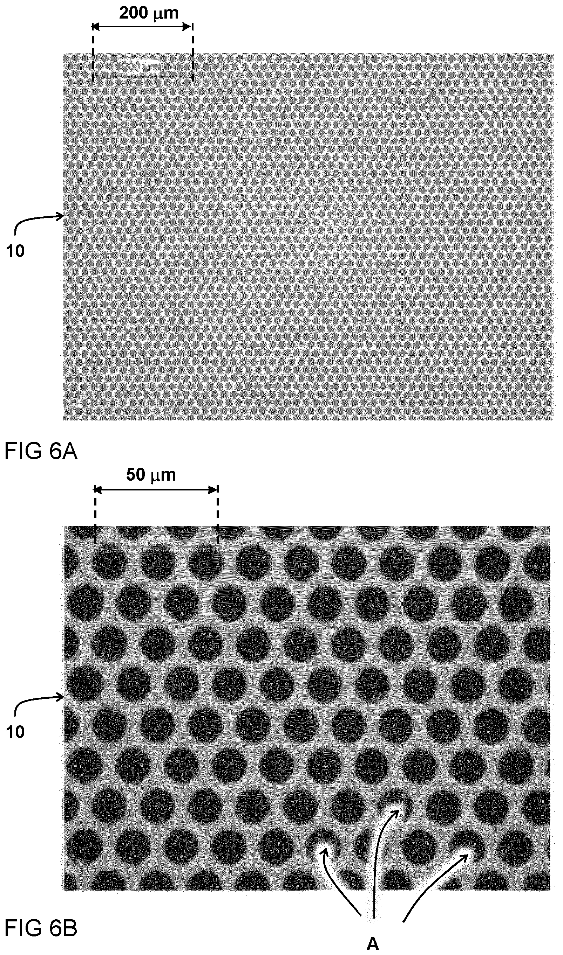

FIG. 6A, 6B are two optical microscope images of sections of an exemplary optical collimator film 10 obtained with mutually different magnifications. The exemplary optical collimator film 10 has a surface area of 6 x 6 inch (about 15 x 15 cm), and has a thickness of about 100 micron. As is apparent from the images, the collimator film obtained therewith has a very regular pattern of apertures A. In this example the apertures are arranged in a hexagonal grid. A diameter Da of the apertures is approximately 10 micron, and a center to center distance Dcc between mutually succeeding apertures in a direction of a main axis of the grid is about 13 micron.

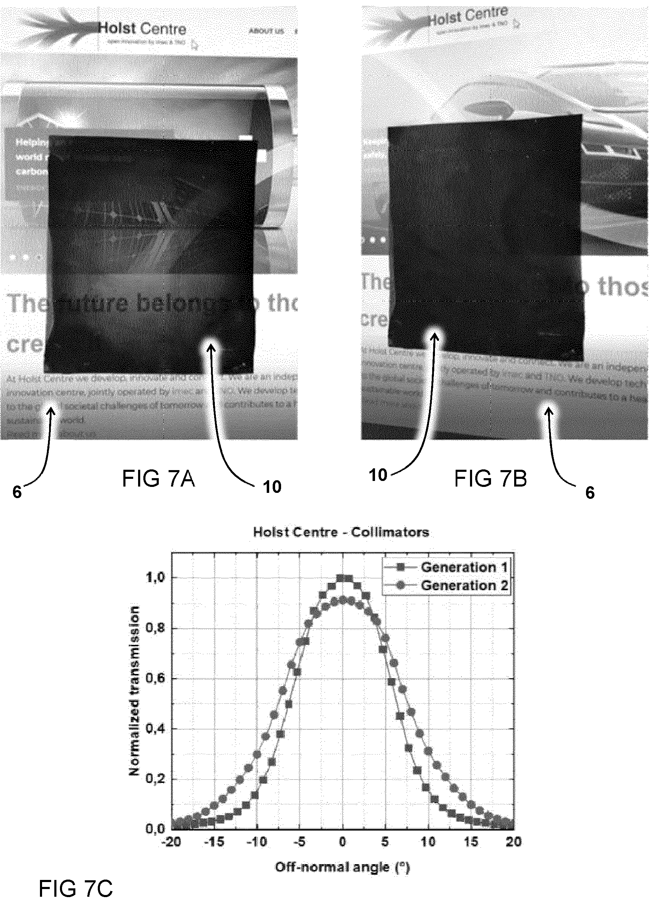

FIG. 7A, 7B shows an image of a monitor screen 6 when seen from mutually different angles. A portion of the monitor screen 6 is covered with an improved optical collimator foil 10. FIG. 7A shows the screen as visible by a user positioned in front thereof. FIG. 7B shows how the monitor screen appears to a person looking at the screen from an angle. It is immediately apparent that the optical collimator foil restricts access of the contents of the screen to the user, i.e. the person arranged in front of the screen. FIG. 7C shows a normalized transmission as a function of the viewing angle for exemplary collimator foils.

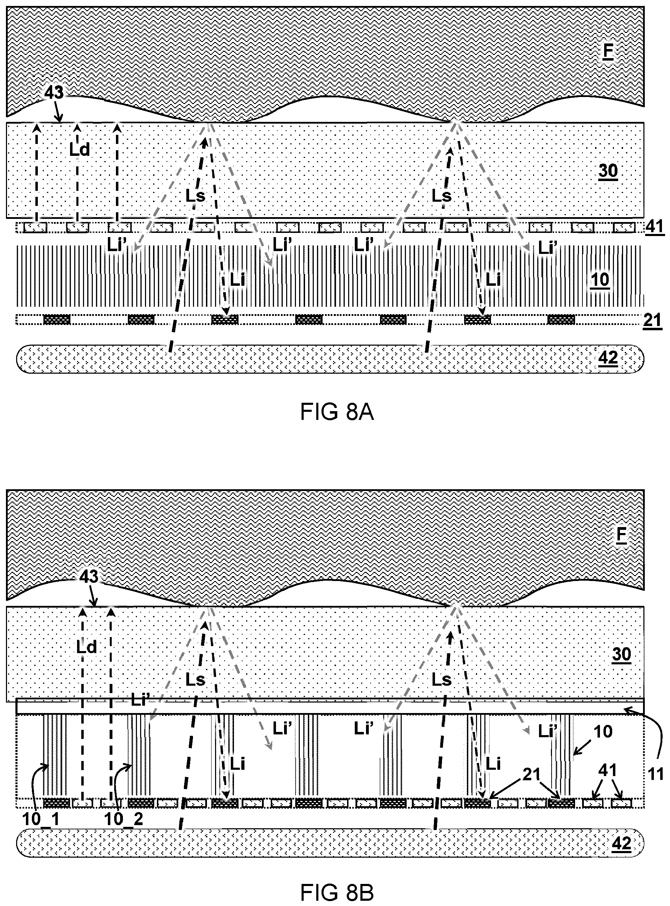

Alternative or further aspects of the present disclosure may also find application in a fingerprint detector, or in a display device comprising a fingerprint detector or other image detector. For example, FIGs. 8A, 8B illustrate embodiments for a display device with a display screen 43 configured for both displaying an image and detecting or imaging an object such as a finger pressed against or in the vicinity of the display screen 43. Typically, the display screen comprises display pixels 41 to emit light Ld for displaying the image on the display screen 43, e.g. through the transparent cover plate 30.

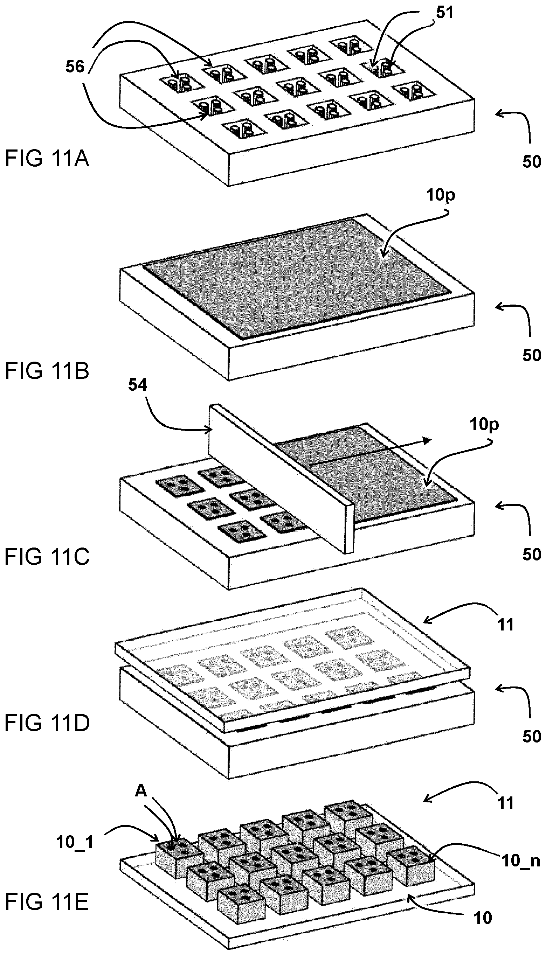

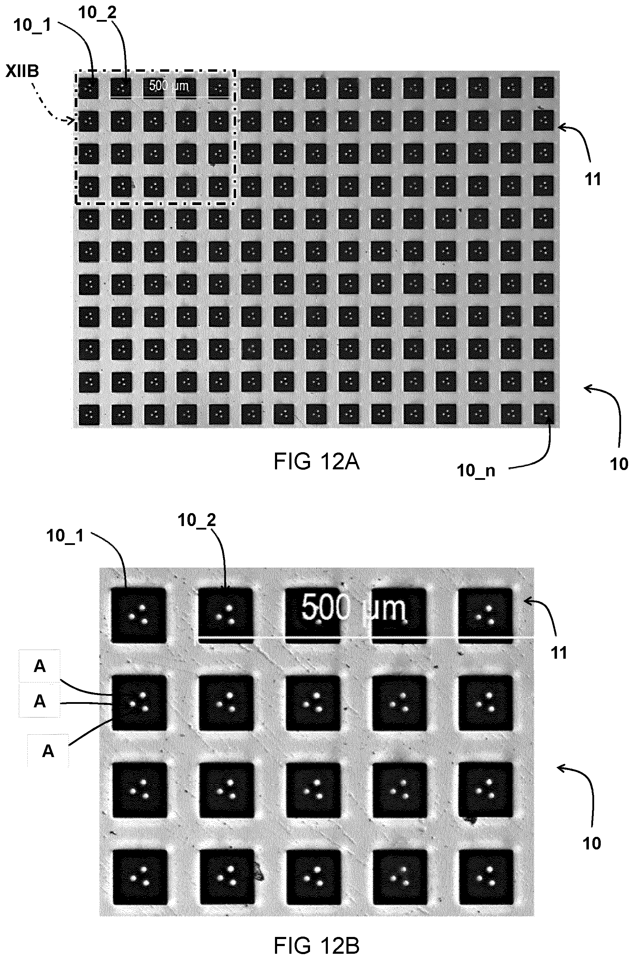

In one embodiment, as illustrated in FIG 8A, the display pixels 41 are disposed in front of a collimator filter comprising a collimator film 10, i.e. between the collimator filter and (a view side of) the display screen 43. For example, the display pixels 41 may be sparsely distributed passing at least some of the incident light Li, Li' from the object there through. In some embodiments, an extended collimator filter may be used to cover the detector pixels 21 below for allowing only the collimated light Li through while blocking the non-collimated light Li'. In another or further embodiment, as illustrated in FIG 8B, the display pixels 41 may be disposed partly of fully in line between the detector pixels 21. For example, the display and detector pixels can be part of a same matrix or two matrices can be partly overlapped. In a further preferred embodiment, as illustrated, the collimating parts of the collimator filter 10 may be localized to exclusively cover the detector pixels 21. For example, the collimator filter 10 may be provided only on top of the detector pixels 21 or the collimator filter 10 may comprise apertures for passing the light Ld of the display pixels 41 through. In this way the adjacent display pixels 41 may be free to emit their light Ld to reach the display screen 43 unobstructed. FIG. 12A, 12B shows microscopy images of a collimator filter 10 comprising collimator film sections 10_1, 10_2, .. supported on a support layer 11 as used in the display device. As shown therein, each collimator film section 10_1, 10_2, ...comprises a set of apertures. FIG. 11A to 11E schematically illustrate an embodiment of the improved method with which the collimator filter 10 comprising collimator film sections 10_1, 10_2, ... supported on a support layer 11 may be formed.

In some embodiments, as shown in FIGs 8A and 8B, the detector (with or without display pixels), may comprise a backlight 42. For example, the backlight 42 is disposed behind the detector pixels 21 and/or display pixels 41. In a preferred embodiment, the backlight 42 is configured to emit a source light Ls at a wavelength outside the visible spectrum, e.g. (near) infrared light, detectable by the detector pixels 21. This may have an advantage that a user is not bothered by the light for illuminating and imaging the object. The source Ls emitted from the backlight may pass through the grid of pixels. Optionally, one or more wavelength filters (not shown) may be disposed between the illuminated object F and the detector pixels 21 (but not the display pixels) so that other wavelengths except that of the source light Ls are filtered out and the detector pixels 21 exclusively receive the intended source light, e.g. instead of light from the display pixels 41. In some embodiments, the matrix material itself acts as the wavelength filter. For example, wavelength absorbing molecules may be added to an otherwise transparent matrix, or the matrix material is already selected to transmit only selective wavelengths corresponding to the back light. For example, the back light may emit visible source light, which is passed by the matrix material while absorbing (external) infrared wavelengths. In one embodiment, the matrix material is adapted to substantially pass most light in a visible wavelength range (corresponding to the source light Ls) while absorbing most light in a (near) infrared light wavelength range. For example the matrix material blocks at least ninety percent, or more, of the light with a wavelength over six hundred nanometer. Using the matrix material itself as a wavelength filter may provide an even more compact design. Of course also other wavelengths cut offs can be used depending on the source light.

Alternatively, or additionally, to using a dedicated backlight 42 to illuminate the object F, the object may also be illuminated by the display pixels 41 themselves. In some embodiments, additional pixels may be included between the display pixels, e.g. emitting infrared, for illuminating the object. Optionally, the image detector or display screen may also comprise a touch interface for detecting the presence of one or more objects, e.g. fingers on the display screen 43. In some embodiments, the imaged detector may itself act as a touch interface. For example, one application can be a mobile device, e.g. smart phone, comprising a display screen with fingerprint detector as described herein.

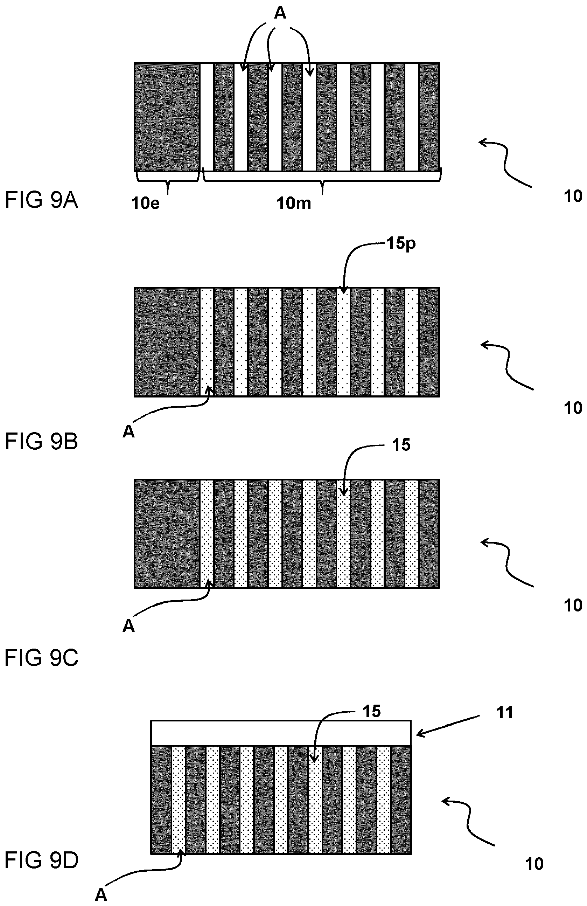

FIG. 9A - 9D shows further, possible steps which when desired may be applied to the product obtained in FIG. 4D, but are also applicable to the product obtained in FIG. 1F. FIG. 9A shows again the optical collimator film 10 of FIG. 4D. In a first of the further possible steps the apertures A in the collimator film 10 are filled with curable precursor 15p for a transparent filling material, resulting in the intermediary product as shown in FIG. 9B. In a subsequent one of the further possible steps the precursor present in the apertures is cured, therewith obtaining the optical collimator foil 10 having its apertures A filled with a transparent material 15 as shown in FIG. 9C, or as shown in FIG. 9D in case a support layer 11 is provided. As noted above, curing may be accomplished in various ways, e.g. using a mixture of mutually reactive components, or by supply of energy.

In the first place, the presence of the transparent material 15 in the apertures mechanically reinforces the collimator foil 10. In the second place, provided that a refractive index of the transparent material 15 exceeds a refractive index of a medium present at a side where light rays enter the collimator foil 10 enhance the collimating effect. This is because a light ray entering the aperture A at an angle relative to the length axis of the aperture will be refracted in a direction with a larger angle. As a result, the threshold angle θmax is reduced.

In other or further embodiments, at least part of the entry surface 12 and/or exit surface 13 of the optical collimator film is covered with a transparent cover layer. As mentioned above, a cover layer may be provided already to facilitate separation of the optical collimator film from the mold. Alternatively a cover layer may be provided in a later stage of manufacturing. A cover layer may be manufactured (or afterwards grinded, polished, or lapped) to form an optically flat entry surface 12 and/or exit surface 13. Especially, the optical entry surface 12 may be relatively smooth to prevent or minimize scattering of the incident light Li. For example, the surface or surfaces are optically flat with surface deviations less than one micrometer, less than five hundred nanometer, less than three hundred nanometer, less than hundred nanometer, less than fifty nanometer, or less, depending on the application. Preferably, the size of the surface deviations is at least lower than the aperture diameter or size "Da". Alternatively, or in addition to the transparent cover layer 2t (See FIG. 3B) having a thickness on top of the collimator film, the cover layer may be omitted or the thickness of the cover layer can be reduced to a minimum, e.g. less than hundred nanometers, less than fifty nanometer, or even less than ten nanometer.

The elastic opaque material of the collimator film forms a pattern of interconnected walls W, wherein the apertures A are each surrounded by respective parts of the walls W. In an example, the walls W have a thickness Dw between half a micrometer and two micrometer and the wall thickness Dw is less than the aperture diameter Da by at least a factor three. A total surface area of the filter structure covered by the micro-apertures A is at least forty percent.

FIG. 11A to 11E show in a perspective view a further embodiment of a method of manufacturing an optical collimator film. In this case, the pillars 51 are provided in a distributed manner over a plurality of recesses 56 in the mold 50. In the example shown, the recesses 56 have a square cross-section and a set of three pillars 51 is arranged in each recess. By way of example, the recesses have a cross-section of about 80 x 80 micron micron, and the walls between the recesses have thickness of 45 micron. The three pillars 51 have a diameter of about 7 micron and are arranged at a center to center distance of 21 micron. In the example shown the height of the pillars and the depth of the recesses is about 100 micron. Therewith the height to diameter ratio is about 13. However, also embodiments are possible wherein the recesses have a different cross-section or depth, or a different number of pillars. Also mutually different recesses may have a mutually different number of pillars.

As shown in FIG. 11B, the mold 50 is filled with a precursor 10p of an elastic light absorbing material. Optionally an excess amount of the liquid above the free ends of the pillars (See FIG. 11B) is removed with a blade 54 as shown in FIG. 11C. The blade 54 may be supported at its sides by a rim of the mold 50, so that the upper surface of the liquid precursor 10p coincides with the free ends of the pillars 51. FIG. 11D shows how a support layer 11 is arranged against a side of the mold 50 where the pillars 51 have their free ends. Optionally, the step shown in FIG. 11D directly follows the step shown in FIG. 11B, and a pressure is exerted on the support layer 11 to cause an excess amount of liquid precursor 10p to escape from the mold 50 in a lateral direction.

In a subsequent process of curing the precursor (not shown) the collimator film 10 formed therewith adheres to the support layer 11. Adherence between the support layer 11 and the film 10 of opaque elastic material can be promoted in that the support layer 11 when arranged at the surface of the precursor 10p of opaque elastic material is not fully cross-linked.

FIG. 11E shows the support layer 11 having the collimator film 10 adhered thereto after its separation from the mold 50. The collimator film 10 is partitioned into collimator film 10 is partitioned into collimator film sections 10_1,...,10_n, each having respective apertures A formed therein by the set of pillars in the corresponding recess in the mold.

FIG. 12A is a microscopy image of a collimator film 10 supported by the support layer 11 as is obtained by an embodiment of the method as shown in FIG. 11A to 11E. The microscopy image FIG. 12A shows a top-view of the collimator film 10. FIG. 12B shows a magnified section of the collimator film 10 as indicated by XIIB in FIG. 12A.

Terminology used for describing particular embodiments is not intended to be limiting of the invention. As used herein, the singular forms "a", "an" and "the" are intended to include the plural forms as well, unless the context clearly indicates otherwise. The term "and/or" includes any and all combinations of one or more of the associated listed items. It will be understood that the terms "comprises" and/or "comprising" specify the presence of stated features but do not preclude the presence or addition of one or more other features. It will be further understood that when a particular step of a method is referred to as subsequent to another step, it can directly follow said other step or one or more intermediate steps may be carried out before carrying out the particular step, unless specified otherwise. Likewise it will be understood that when a connection between structures or components is described, this connection may be established directly or through intermediate structures or components unless specified otherwise.

The invention is described more fully hereinafter with reference to the accompanying drawings, in which embodiments of the invention are shown. In the drawings, the absolute and relative sizes of systems, components, layers, and regions may be exaggerated for clarity. Embodiments may be described with reference to schematic and/or cross-section illustrations of possibly idealized embodiments and intermediate structures of the invention. In the description and drawings, like numbers refer to like elements throughout. Relative terms as well as derivatives thereof should be construed to refer to the orientation as then described or as shown in the drawing under discussion. These relative terms are for convenience of description and do not require that the system be constructed or operated in a particular orientation unless stated otherwise.

In interpreting the appended claims, it should be understood that the word "comprising" does not exclude the presence of other elements or acts than those listed in a given claim; the word "a" or "an" preceding an element does not exclude the presence of a plurality of such elements; any reference signs in the claims do not limit their scope; several "means" may be represented by the same or different item(s) or implemented structure or function; any of the disclosed devices or portions thereof may be combined together or separated into further portions unless specifically stated otherwise. Where one claim refers to another claim, this may indicate synergetic advantage achieved by the combination of their respective features. But the mere fact that certain measures are recited in mutually different claims does not indicate that a combination of these measures cannot also be used to advantage. The present embodiments may thus include all working combinations of the claims wherein each claim can in principle refer to any preceding claim unless clearly excluded by context.

**Claims**

1. A method of manufacturing an optical collimator film (10)

   providing a mold (50) comprising an array of pillars (51);
   with said mold (50) forming the optical collimator film (10) from an elastic light absorbing material having apertures (A) therein defined by the array of pillars (51);
   separating the collimator film (10) from the mold (50).

2. The method according to claim 1, comprising filling a space between the pillars (51) with a liquid, curable precursor (10p) for the elastic, light absorbing resin material and subsequently curing the precursor to obtain the elastic, light absorbing resin material, wherein optionally, before the step of curing an excess amount of the liquid curable precursor above the free ends of the pillars is removed with a blade (54), wherein optionally the blade (54) is supported at its sides by a rim of the mold, so that the upper surface of the liquid precursor coincides with the free ends of the pillars .

3. The method according to claim 1 or 2, further comprising:

   arranging a support layer (11) at a side of the mold (50) where the pillars (51) have their free ends and adhering the support layer (11) to the elastic light absorbing material in the mold, wherein optionally a pressure is exerted at the support layer (11) causing an excess amount of liquid precursor (10p) for the elastic light absorbing material to escape;
   pulling the support layer (11) having the optical collimator film (10) adhered thereto apart from the mold (50).

4. The method according to claim 3, wherein the support layer (10) is transparent.

5. The method according to one or more of the preceding claims, wherein the mold (50) is provided with one or more lateral portions (52e) outside a main portion (50m) comprising the array of pillars (51) to facilitate separating the collimator film from the mold (50).

6. The method according to one or more of the preceding claims, wherein the elastic light absorbing material has a Young's modulus of at most 1 MPa.

7. The method according to claim 3 and claim 6, wherein the support layer (11) is provided of a material that has a Young's modulus that is at least as high as the Young's modulus of the elastic light absorbing material.

8. The method according to one or more of the preceding claims, wherein the elastic light absorbing material of the collimator film (10) has a Poisson's ratio of at least 0.4, and/or wherein the elastic light absorbing material of the collimator film (10) is fully elastic.

9. The method according to one or more of the preceding claims, wherein the elastic light absorbing material of the collimator film (10) is filled with light absorbing micro-nanoparticles, preferably carbon.

10. The method according to one or more of the preceding claims comprising subsequent to separating the collimator film (10) from the mold (50):

    filling apertures (A) in the collimator film (10) with curable precursor (15p) for a transparent filling material;
    curing said precursor (15p).

11. The method according to one or more of the preceding claims wherein the pillars (51) of the mold (50) have an aspect ratio of length/ effective diameter of at least 5, wherein the effective diameter of a pillar is defined as $\sqrt{4Ax/\pi}$ , wherein Ax is the cross-sectional area of the pillar.

12. A stretchable collimator film (10) of a light absorbing material defining apertures (A) wherein the light absorbing material has a Young's modulus of at most 1 MPa wherein optionally the elastic light absorbing material of the collimator film (10) has a Poisson's ratio of at least 0.4 and/or the elastic light absorbing material of the collimator film (10) is fully elastic.

13. The stretchable collimator film (10) according to claim 12, wherein a ratio defined by a thickness (Dw) of a wall (W) between mutually neighboring apertures (A) divided by a diameter (Da) of the apertures is in a range between 0.1 and 0.5 and/or wherein a ratio defined by a diameter (Da) of the apertures (A) divided by a center-to-center distance (Dcc) of mutually neighboring apertures is in the range of 0.6 to 0.9.

14. The stretchable collimator film (10) according to claim 12 or 13, wherein the apertures (A) in the collimator film (10) are filled with a transparent filling material.

15. A collimator filter (1) comprising

    an entry surface (12) for receiving incident light (Li,Li') at different angles of incidence (θi,θi') with respect to a principal transmission direction (Z) of the collimator filter (1);
    an exit surface (13) at an opposite side of the collimator filter (1) with respect to the entry surface (12) for allowing output light (Lo) to exit from the collimator filter (1); and
    a stretchable collimator film (10) according to one or more of the claims 12-14 between the entry surface (12) and the exit surface (13) for transmitting at least part of the incident light (Li) having angles of incidence (θi) below a threshold angle (θmax) with respect to the principal transmission direction (Z) as the output light (Lo), and blocking the incident light (Li') having angles of incidence (θi') above the threshold angle (θmax) from passing the filter structure;

FIG 1A

FIG 1B

FIG 1C

R

11

10

53

53

52

50

FIG 1D

55

peel

11

51

10

52

FIG 1E

11

III          III

Ha

10

A

6 inch

FIG 1F

FIG 2A

FIG 2B

FIG 2C

FIG 2D

FIG 2E

FIG 3A

FIG 3B

FIG 4A

FIG 4B

FIG 4C

FIG 4D

FIG 5A

FIG 5B

FIG 5C

FIG 5D

200 µm

10

FIG 6A

50 µm

10

FIG 6B

A

FIG 7A  6  10

FIG 7B  10  6

FIG 7C

FIG 8A

FIG 8B

A

FIG 9A

10e    10m

10

15p

FIG 9B

A

10

15

FIG 9C

A

10

15    11

FIG 9D

A

10

FIG 10

56
51

FIG 11A
50

10p

FIG 11B
50

54
10p

FIG 11C
50

11

FIG 11D
50

11

A
10_1
10_n
FIG 11E
10

10_1 10_2

XIIB

500 μm

11

FIG 12A

10_n 10

10_1 10_2

500 μm

11

A
A
A

10

FIG 12B

Europäisches
Patentamt

European
Patent Office

Office européen
des brevets

# EUROPEAN SEARCH REPORT

Application Number

EP 22 15 5687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/093292 A1 (BIEGELSEN DAVID K [US]) 4 May 2006 (2006-05-04) | 1-9, 11-13,15 | INV. B29D11/00 |
| Y | * abstract * | 10 | G02B27/30 |
| A | * figures 1-18 * * paragraphs [0010] – [0014], [0039] – [0043], [0045] – [0052], [0055] – [0063] * | 14 | |
| | ----- | | |
| X | US 2021/004557 A1 (TORDERA SALVADOR DANIEL [NL] ET AL) 7 January 2021 (2021-01-07) | 12-15 | |
| Y | * abstract * * figures 1A-4B * * paragraphs [0024] – [0038] * | 10 | |
| | ----- | | |

TECHNICAL FIELDS SEARCHED (IPC)

B29D
G02B

The present search report has been drawn up for all claims

| Place of search | Date of completion of the search | Examiner |
|---|---|---|
| The Hague | 20 July 2022 | Heckmann, Paul |

EPO FORM 1503 03.82 (P04C01)

## ANNEX TO THE EUROPEAN SEARCH REPORT
## ON EUROPEAN PATENT APPLICATION NO.

EP 22 15 5687

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2022

| Patent document cited in search report | | Publication date | Patent family member(s) | | Publication date |
|---|---|---|---|---|---|
| US 2006093292 | A1 | 04-05-2006 | US 2006093292 A1 | | 04-05-2006 |
| | | | US 2007138663 A1 | | 21-06-2007 |
| US 2021004557 | A1 | 07-01-2021 | CN 111868577 A | | 30-10-2020 |
| | | | EP 3537189 A1 | | 11-09-2019 |
| | | | EP 3762748 A1 | | 13-01-2021 |
| | | | JP 2021515275 A | | 17-06-2021 |
| | | | TW 201939112 A | | 01-10-2019 |
| | | | US 2021004557 A1 | | 07-01-2021 |
| | | | WO 2019172763 A1 | | 12-09-2019 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160224816 A1